# EUROPÄISCHE PATENTANMELDUNG

(11) **EP 4 741 691 A1**
(43) Veröffentlichungstag der Anmeldung: **13.05.2026**
(21) Anmeldenummer: 25206106.4
(22) Anmeldetag: 01.10.2025
(51) Int. Cl.: F16K 5/04, F16K 11/085

(54) **VENTIL**

(30) Priorität: 08.11.2024 DE 202024106429 U
(71) Anmelder: TI Automotive Technology Center GmbH, 76437 Rastatt (DE)
(72) Erfinder: Tuzin, Artem, 76297 Stutensee (DE)
(74) Vertreter: Reiser & Partner Patentanwälte mbB

(57) **Zusammenfassung**

Ventil (1), umfassend ein Ventilgehäuse (2) mit einer Ventilkammer (3), wobei die Ventilkammer (3) eine Kammerwand (4) aufweist, in die zumindest ein Fluidkanal (5) mündet, wobei in der Ventilkammer (3) ein Ventilkern (6) gelagert ist, wobei der Ventilkern (6) mit einer Kanalstruktur (7) versehen ist, welche mit dem Fluidkanal (5) zusammenwirkt, wobei dem Fluidkanal (5) eine Dichtung (8) zugeordnet ist, wobei die Dichtung (8) an der Kammerwand (4) angeordnet ist, wobei die Dichtung (8) flächig ausgebildet ist und zumindest zwei Lagen (9, 10) umfasst.

## Beschreibung

### Ventil

Die Erfindung betrifft ein Ventil, umfassend ein Ventilgehäuse mit einer Ventilkammer, wobei die Ventilkammer eine Kammerwand aufweist, in die zumindest ein Fluidkanal mündet, wobei in der Ventilkammer ein Ventilkern gelagert ist, wobei der Ventilkern mit einer Kanalstruktur versehen ist, welche mit dem Fluidkanal zusammenwirkt, wobei dem Fluidkanal eine Dichtung zugeordnet ist.

Ein derartiges Ventil ist aus der WO 2017/095994 A1 bekannt. Das dort beschriebene Ventil ist als Rotationsventil ausgebildet und kommt in Kühlkreisläufen zur Steuerung des Kühlmittelstroms zum Einsatz. Durch die in das Ventilgehäuse mündenden Fluidöffnungen kann ein Kühlfluid in das Ventil ein- und ausströmen. Die in den Ventilkern eingebrachte Kanalstruktur steuert dabei den Kühlmittelstrom, wobei je nach Ausgestaltung und Anzahl der Fluidkanäle unterschiedliche Kühlkreisläufe angesteuert, der Volumenstrom des Kühlmittels reguliert und/oder die Durchflussrichtung des Kühlmittels angepasst werden können.

Bei einem Rotationsventil erfolgt eine Anpassung des Kühlmittelstroms durch Drehen des Ventilkerns, wobei der entsprechende Aktor zum Drehen des Ventilkerns einfach ausgebildet und einfach ansteuerbar ist. Dementsprechend sind Rotationsventile und die dazugehörigen Aktoren kostengünstig herstellbar und benötigen nur wenig Bauraum.

Rotationsventile sind dementsprechend insbesondere vorteilhaft in Bezug auf den Einsatz in Temperierkreisläufen im Bereich der Elektromobilität. Zu temperierende Komponenten von Elektrofahrzeugen sind dabei insbesondere elektrische Energiespeicher, die Leistungselektronik und auch Steckverbindungen von Schnellladeeinrichtungen. Das durch den Temperierkreislauf strömende Temperiermedium kann je nach Anforderung in einer Heizeinrichtung erwärmt oder in einer Kühleinrichtung gekühlt werden. Die Steuerung des Temperiermediums erfolgt über ein oder mehrere Rotationsventile.

Zur Vermeidung interner Leckagen ist im Bereich des Übergangs zwischen Fluidkanal und Ventilkern ein Dichtkörper angeordnet. Dabei besteht das Problem, dass der Dichtkörper je nach Ausgestaltung hohe Reibkräfte verursachen kann, was sich negativ auf den Verschleiß und die erforderliche Stellkraft des Aktors auswirkt. Andererseits sollen interne Leckagen zwischen Ventilgehäuse und Ventilkern möglichst vermieden werden.

Der Erfindung liegt die Aufgabe zugrunde, ein Ventil bereitzustellen, welches kostengünstig herstellbar ist und eine lange Gebrauchsdauer aufweist.

Diese Aufgabe wird mit den Merkmalen von Anspruch 1 gelöst. Auf vorteilhafte Ausgestaltungen nehmen die Unteransprüche Bezug.

Das erfindungsgemäße Ventil umfasst ein Ventilgehäuse mit einer Ventilkammer, wobei die Ventilkammer eine Kammerwand aufweist, in die zumindest ein Fluidkanal mündet, wobei in der Ventilkammer ein Ventilkern gelagert ist, wobei der Ventilkern mit einer Kanalstruktur versehen ist, welche mit dem Fluidkanal zusammenwirkt, wobei dem Fluidkanal eine Dichtung zugeordnet ist, wobei die Dichtung an der Kammerwand angeordnet ist, wobei die Dichtung flächig ausgebildet ist und zumindest zwei Lagen umfasst.

Die erfindungsgemäße Dichtung ist durch die flächige Ausgestaltung besonders einfach und kostengünstig herstellbar und auch das Positionieren der Dichtung während der Montage ist besonders einfach. Durch die zweilagige Ausgestaltung der Dichtung ist es möglich, eine erste Lage vorzusehen, die reibungsoptimiert ist, und eine zweite Lage vorzusehen, die besonders vorteilhafte federnde Eigenschaften aufweist. Diese Ausgestaltung ermöglicht eine hohe Dichtwirkung bei niedriger Reibkraft. Dadurch sinkt das für das Bewegen des Ventilkerns erforderliche Drehmoment und es ist der Einsatz kostengünstiger Aktoren möglich.

Die Dichtung kann rechteckig ausgebildet sein und eine Durchbrechung aufweisen, welche mit dem Fluidkanal korrespondiert. Bei dieser Ausgestaltung ist die Dichtung in Form einer Flachdichtung ausgebildet und besonders einfach an der Kammerwand der Ventilkammer positionierbar.

Die Dichtung kann an der die Durchbrechung begrenzenden Kante zumindest auf einer Seite einen Dichtwulst aufweisen. Dabei ist der Dichtwulst vorzugsweise auf der dem Ventilkern zugewandten Seite ausgebildet. Gemäß einer weiteren Ausgestaltung ist der Dichtwulst beidseitig ausgebildet und erstreckt sich in Richtung des Ventilgehäuses und des Ventilkerns. Der Dichtwulst stellt eine Materialverstärkung dar, was sich vorteilhaft auf die mechanische Stabilität der Dichtung auswirkt. Des Weiteren ermöglicht der Dichtwulst einen definierten Kontakt des Ventilkerns und damit eine besonders gezielte Dichtwirkung bei niedrigen Reibkräften.

In einer vorteilhaften Weiterbildung sind an der die Durchbrechung begrenzenden Kante beidseitig Dichtwulste angeordnet. Dabei erstreckt sich ein Dichtwulst in Richtung der Kammerwand und ein Dichtwulst in Richtung des Ventilkerns. Dadurch verbessert sich die Dichtwirkung der Anordnung.

Der Dichtwulst kann eine bogenförmige Kontur aufweisen. Durch die bogenförmige Kontur ergibt sich eine allmähliche Dickenzunahme der Dichtwulst und damit einhergehend eine verbreiterte Kontaktfläche der Dichtung an dem abzudichtenden Gegenkörper bspw. dem Ventilkern. Demgegenüber weist eine Ausgestaltung der Dichtung in Form einer Dichtlippe oder einer Dichtrippe häufig eine linienförmige Anlagefläche auf, was aber mit einer sehr hohen, verschleißfördernden Kontaktpressung einhergeht. Bei einem bogenförmigen Verlauf der Dichtwulst ergibt sich hingegen eine die Dichtfläche ausbildende verbreiterte Anlagefläche mit einer flächigen Verteilung der Anpresskraft. Dadurch sinkt das Verschleißrisiko und eine bleibende Verformung der Dichtgeometrie wird vermieden. Dies ist insbesondere dann vorteilhaft, wenn die Lage der Dichtung, die dem Ventilkern zugewandt ist, als Folie ausgebildet ist und dementsprechend eine nur sehr geringe Materialstärke aufweist. Durch die Reduzierung der Anpresskraft kann vermieden werden, dass diese Lage vorzeitig verschleißt. Alternativ kann der Dichtwulst auch rechteckförmig ausgebildet sein. Dadurch vergrößert sich die Kontaktfläche im Vergleich zu der bogenförmigen Ausgestaltung der Dichtwulst noch einmal. Durch die Verringerung der Anpresskraft kann es aber gleichzeitig auch zu geringen Leckagen kommen.

Die Dichtung kann an den in Umfangsrichtung weisenden Kanten Stützwulste aufweisen. Die Stützwulste verbessern die Formstabilität und die mechanische Stabilität der Dichtung. Des Weiteren vereinfachen die Stützwulste die Montage der Dichtung. Vorzugsweise weisen die Stützwulste eine bogenförmige Kontur auf. Die Konturen von Dichtwulst und Stützwulsten können vergleichbar ausgebildet sein. Sind auch die Stützwulste mit einer bogenförmigen Kontur versehen, reduziert sich auch in diesen Bereichen der Verschleiß bei gleichzeitig hoher Dichtkraft. Alternativ können die Stützwulste auch rechteckförmig ausgebildet sein. Die Stützwulste können dabei in Richtung der Kammerwand oder des Ventilkerns hervorstehen. Vorzugsweise sind die Stützwulste derart ausgebildet, dass sich diese in Richtung der Kammerwand und des Ventilkerns erstrecken.

Den Fluidkanälen können Stützrippen zugeordnet sein, welche sich in axialer Richtung erstecken und radial nach innen hervorstehen, wobei die Dichtung zwischen zwei Stützrippen angeordnet ist. Die Stützrippen bilden einerseits Positionierhilfen, die eine einfache und schnelle Montage der Dichtung ermöglichen. Andererseits kann sich die Dichtung an den Stützrippen abstützen, wenn der Ventilkern verstellt und dadurch eine in Umfangsrichtung der Kammerwand wirkende mechanische Kraft in die Dichtung eingeleitet wird.

Die Stützwulste können an den Stützrippen zur Anlage gelangen. Dadurch ist die Dichtung besonders sicher zwischen den Stützrippen positioniert und die Anordnung von Ventilkammer und Dichtung ist besonders stabil.

Das Ventil kann als Rotationsventil mit einer zylindrischen Ventilkammer ausgebildet sein. Bei dieser Ausgestaltung erfolgt das Verstellen des Ventilkerns durch Rotation und die Fluidkanäle erstrecken sich in radialer Richtung ausgehend von der Kammerwand nach außen. Die Dichtung ist im Inneren des Ventilgehäuses an der Kammerwand angeordnet und der Ventilkern dreht sich an den Dichtungen entlang. Das Ventilgehäuse und der Ventilkern können aus Kunststoff ausgebildet und damit kostengünstig herstellbar sein.

Das Ventil kann als Proportionalventil ausgebildet sein. Bei dieser Ausgestaltung kann der Ventilkern auch Zwischenpositionen einnehmen, bei denen Fluidkanäle teilweise geöffnet bzw. teilweise geschlossen sind. Diese Ausgestaltung beansprucht die Dichtung besonders stark, da die Begrenzungswände der Kanalstrukturen des Ventilkerns nur Teilbereiche der Dichtung überdecken und dabei in den Kantenbereichen der Kanalstrukturen des Ventilkerns hohe Anpresskräfte an die Dichtung entstehen können. Durch die erfindungsgemäße Ausgestaltung der Dichtung weist diese jedoch auch bei Ausgestaltung des Ventils als Proportionalventil eine lange Gebrauchsdauer auf. Alternativ kann das Ventil auch als Schaltventil ausgebildet sein.

Eine erste Lage der Dichtung kann aus einem elastomeren Werkstoff und eine zweite Lage der Dichtung kann aus einem Material mit geringer Reibung bspw. aus Polytetrafluorethylen (PTFE) ausgebildet sein, wobei die zweite Lage dem Ventilkern zugewandt ist. Die erste Lage bildet dementsprechend eine elastisch federnde Lage und die zweite Lage weist einen besonders niedrigen Reibungskoeffizienten auf. Im Zusammenspiel aus beiden Eigenschaften ergibt sich eine Dichtung mit einer hohen Dichtwirkung, wobei die Reibungskräfte gering sind, sodass der Ventilkern widerstandsarm gegenüber dem Ventilgehäuse bewegt, insbesondere verdreht werden kann.

Die erste Lage kann aus Ethylen-Propylen-Dien-Monomer (EPDM) ausgebildet sein. EPDM ist ein elastomerer Werkstoff, der hervorragend zum Einsatz gegen wässrige Medien geeignet ist und auch gegenüber hohen Medientemperaturen beständig ist.

Die Konturen von Dichtwulst und Stützwulsten können einen Radius zwischen 1 mm und 3 mm aufweisen. Dadurch ergibt sich ein allmählicher Dickenzuwachs von Dichtwulst und Stützwulsten und damit einhergehend eine flächige Anlage der Dichtung an Kammerwand und Ventilkern.

Die Konturen von Dichtwulst und Stützwulsten können in den dem Ventilkern und der Kammerwand zugewandten Abschnitten einen flächigen Anlagebereich ausbilden. Im Vergleich zu einem linienförmigen Anlagebereich vergrößert sich die Kontaktfläche und es verringert sich noch einmal die Flächenpressung. Dies ist mit Vorteilen im Hinblick auf die Gebrauchsdauer und einer Verringerung des Risikos einer dauerhaften Deformation der Dichtung verbunden.

Das Ventilgehäuse kann mit einer stirnseitigen Montageöffnung versehen sein. Dabei kann die Montageöffnung strömungsleitend mit der Kanalstruktur zusammenwirken. Ein derart ausgestaltetes Ventil eignet sich insbesondere zur Integration in eine Rohrleitungsanordnung, insbesondere in eine Rohrleitungsanordnung, die im Blasformverfahren hergestellt ist.

Die das Ventil durchströmenden Medien können dabei sowohl über die Fluidkanäle als auch über die Montageöffnung in das Ventil ein- und ausströmen. Die Lagerung des Ventilkerns erfolgt dabei vorzugsweise lediglich an der der Montageöffnung gegenüber liegenden Durchführöffnung. Der Ventilkern ist somit vorzugsweise lediglich einseitig gelagert. Bei dieser Ausgestaltung ist dementsprechend auch bei einer verschlossenen Montageöffnung der Ventilkern einseitig gelagert. Die Montage des Ventils ist dadurch besonders einfach und das Ventilgehäuse ist einfach und kostengünstig herstellbar.

Einige Ausgestaltungen des erfindungsgemäßen Ventils werden nachfolgend anhand der Figuren näher erläutert. Die Figuren zeigen, jeweils schematisch:
- Fig. 1: ein Ventilgehäuse eines Ventils mit Dichtungen in dreidimensionaler Darstellung;
- Fig. 2: einen Ausschnitt des Ventils mit Ventilgehäuse, Dichtung und Ventilkern im Schnitt;
- Fig. 3: eine Dichtung in Vorder- und Rückansicht;
- Fig. 4: das Ventilgehäuse in dreidimensionaler Darstellung;
- Fig. 5: ein Rotationsventil im Schnitt.

Die Figuren zeigen ein Ventil 1 in Form eines Rotationsventils, welches in einer Temperiereinrichtung eines Fahrzeugs angeordnet ist und dort Kühlmittelströme lenkt.

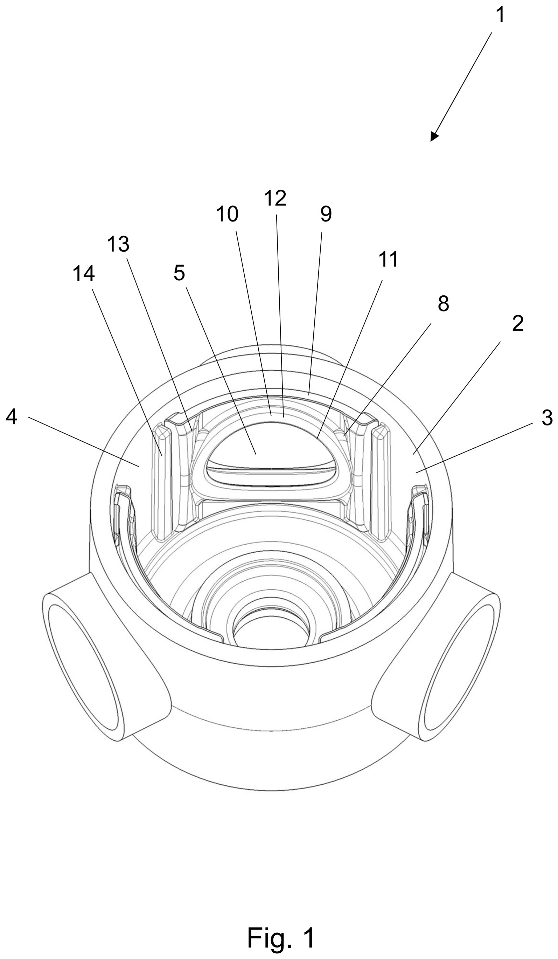

**Fig. 1** zeigt in dreidimensionaler Darstellung das Ventil 1. Das Ventil 1 umfasst ein Ventilgehäuse 2 mit einer zylindrischen Ventilkammer 3, wobei die Ventilkammer 3 eine Kammerwand 4 aufweist, in die mehrere Fluidkanäle 5 münden.

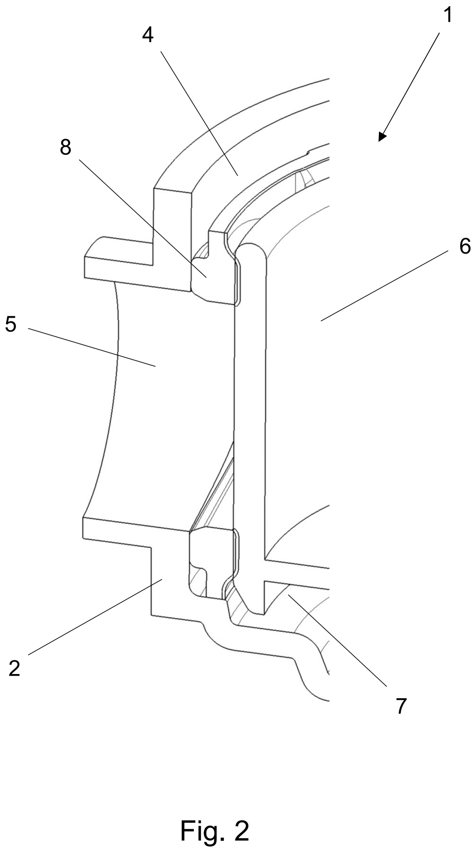

**Fig. 2** zeigt, dass in der Ventilkammer 3 ein Ventilkern 6 gelagert ist, wobei der Ventilkern 6 mit einer Kanalstruktur 7 versehen ist, welche mit den Fluidkanälen 5 zusammenwirkt. Das Ventilgehäuse 2 und der Ventilkern 6 sind aus Kunststoff ausgebildet und im Spritzgießverfahren hergestellt. Das Verstellen des Ventilkerns 6 erfolgt über einen elektromagnetisch angetriebenen Aktor. Das hier gezeigte Ventil 1 ist als Proportionalventil ausgebildet. Hierzu ist der Ventilkern 6 ausgebildet, durch den Aktor stufenlos verstellt werden zu können. Dabei kann der Ventilkern 6 gegenüber den Fluidkanälen 5 Zwischenpositionen einnehmen, bei welchen nur Teilvolumenströme in die Fluidkanäle 5 ein- oder ausströmen können.

Den Fluidkanälen 5 ist jeweils eine Dichtung 8 zugeordnet, wobei die Dichtung 8 an der Kammerwand 4 des Ventilgehäuses 2 angeordnet ist. Die Dichtungen 8 sind flächig ausgebildet und umfassen zwei Lagen 9, 10. Dabei ist die erste Lage 9 aus einem elastomeren Werkstoff, hier EPDM und eine zweite Lage 10 ist aus einem Material mit einem niedrigen Reibungskoeffizienten, vorliegend aus PTFE ausgebildet. Die erste Lage 9 ist dem Ventilgehäuse 2 und die zweite Lage 10 dem Ventilkern 6 zugewandt.

Die Dichtungen 8 sind rechteckig ausgebildet und weisen eine Durchbrechung 11 auf, welche mit den Fluidkanälen 5 korrespondiert. Die Dichtungen 8 weisen jeweils an der die Durchbrechung 11 begrenzenden Kante Dichtwulste 12 auf, wobei sich ein Dichtwulst 12 dem Ventilgehäuse 2 und ein Dichtwulst 12 dem Ventilkern 6 zugewandt ist, wobei der Dichtwulst 12 auf der dem Ventilkern 6 zugwandten Seite eine bogenförmige Kontur hat. Auf der dem Ventilgehäuse 2 zugewandten Seite ist der Dichtwulst 12 abgeflacht und liegt somit flächig an dem Ventilgehäuse 2 an.

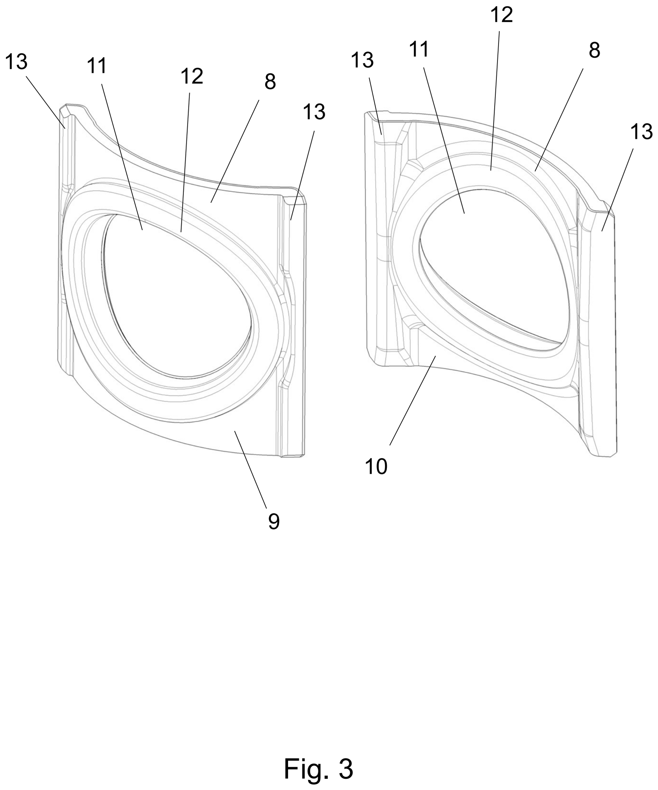

Eine Dichtung 8 ist im Detail in **Fig. 3** gezeigt, wobei die linke Darstellung die Dichtung 8 auf der dem Ventilgehäuse 2 zugwandten Seite mit der ersten Lage 9 und die rechte Darstellung die Dichtung 8 auf der dem Ventilkern 6 zugwandten Seite mit der zweiten Lage 10 zeigt.

Die Dichtungen 8 weisen jeweils an den in Umfangsrichtung weisenden Kanten Stützwulste 13 auf, wobei die Stützwulste 13 an den Stützrippen 14 zur Anlage gelangen. Die Stützrippen 14 verhindern dabei, dass sich die Dichtungen 8 in Umfangsrichtung bewegen. Ebenso wie die Dichtwulste 12 weisen die Stützwulste 13 eine bogenförmige Kontur auf. Die Stützwulste 13 erstrecken sich sowohl in Richtung der Kammerwand 4 als auch in Richtung des Ventilkerns 6.

Die Konturen der Dichtwulste 12 und Stützwulste 13 weisen einen Radius von 2 mm auf. Dabei weisen die Konturen der Dichtwulste 12 und der Stützwulste 13 in den dem Ventilkern 6 und der Kammerwand 4 zugewandten Abschnitten einen flächigen Anlagebereich 19, 19' auf.

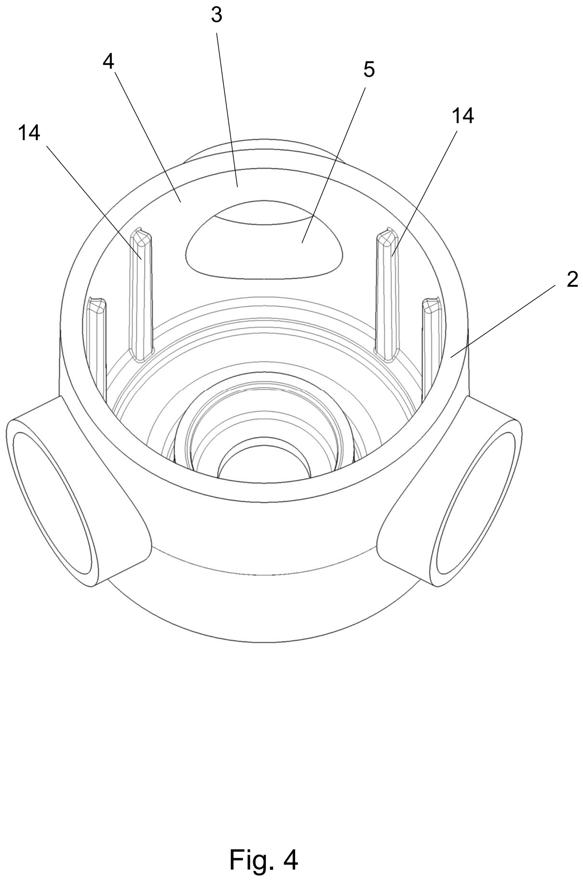

**Fig. 4** zeigt im Detail das Ventilgehäuse 2 in dreidimensionaler Darstellung. Den Fluidkanälen 5 sind Stützrippen 14 zugeordnet, welche sich in axialer Richtung erstrecken und radial nach innen hervorstehen. Je Fluidkanal 5 sind zwei Stützrippen 14 vorgesehen, wobei in Umfangsrichtung betrachtet beidseitig des Fluidkanals jeweils eine Stützrippe 14 vorgesehen ist. Die Dichtungen 8 sind jeweils zwischen zwei Stützrippen 14 angeordnet.

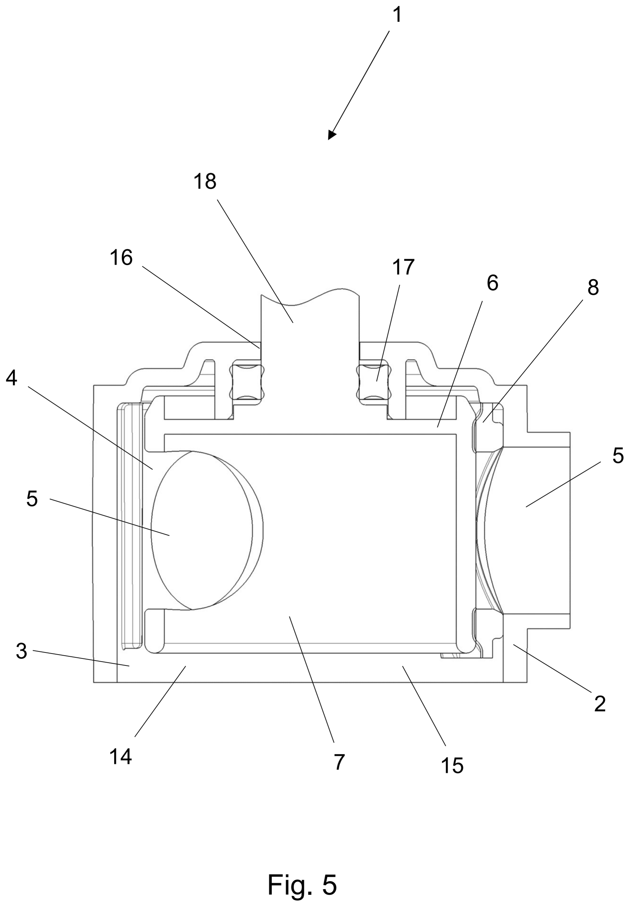

**Fig. 5** zeigt das Ventil 1 gemäß **Fig. 1** mit montiertem Ventilkern 6 im Schnitt
Das Ventilgehäuse 2 weist am axialen unteren Ende eine Montageöffnung 15 auf, die sich über die Stirnseite des axialen Endes erstreckt. Durch die Montageöffnung 15 ist der Ventilkern 6 zur Montage in das Ventilgehäuse 2 einführbar. Der Ventilkern 6 weist eine Antriebswelle 18 auf, welche durch eine in auf der der Montageöffnung 15 gegenüber liegenden Seite in das Ventilgehäuse 2 eingebrachten Durchführöffnung 16 hindurchragt. Die Antriebswelle 18 ist eingerichtet, mit einem Aktor wirkverbunden zu werden, um den Ventilkern 6 zu drehen.

Bei dieser Ausgestaltung ist vorteilhaft, dass die Montage vereinfacht ist und dass das Ventilgehäuse 2 einteilig ausgebildet sein kann. Der Ventilkern 6 ist im Bereich der Antriebswelle 15 außen an dem Ventilgehäuse 2 arretiert bspw. mittels eines Sicherungsrings und dadurch verliersicher in dem Ventilgehäuse 2 gehalten.

Die Lagerung des Ventilkerns 6 erfolgt nur an der der Antriebswelle 18 zugeordneten Stirnseite, so dass der Ventilkern 6 lediglich einseitig gelagert ist. Die Lagerung erfolgt bei diesem Ausführungsbeispiel über einen Dichtring 17, hier ausgestaltet als X-Ring, der gleichzeitig auch als Abdichtung des Spaltes zwischen Ventilgehäuses 2 und Antriebswelle 18 fungiert. Der Dichtring 17 ist der Durchführöffnung 16 zugeordnet. Die axiale Führung des Ventilkerns 6 in dem Ventilgehäuse 2 erfolgt über den Dichtring 17 und die radiale Führung des Ventilkerns 6 in dem Ventilgehäuse 2 erfolgt über die Dichtungen 8.

Die Montageöffnung 15 steht strömungsleitend mit der Kanalstruktur 7 des Ventilkerns 6 in Verbindung. Dadurch kann Medium über die Fluidkanäle 5 und die Montagöffnung 15 in das Ventil 1 ein- und ausströmen.

## Patentansprüche

1. Ventil (1), umfassend ein Ventilgehäuse (2) mit einer Ventilkammer (3), wobei die Ventilkammer (3) eine Kammerwand (4) aufweist, in die zumindest ein Fluidkanal (5) mündet, wobei in der Ventilkammer (3) ein Ventilkern (6) gelagert ist, wobei der Ventilkern (6) mit einer Kanalstruktur (7) versehen ist, welche mit dem Fluidkanal (5) zusammenwirkt, wobei dem Fluidkanal (5) eine Dichtung (8) zugeordnet ist, wobei die Dichtung (8) an der Kammerwand (4) angeordnet ist, wobei die Dichtung (8) flächig ausgebildet ist und zumindest zwei Lagen (9, 10) umfasst.

2. Ventil nach Anspruch 1, **dadurch gekennzeichnet, dass** die Dichtung (8) rechteckig ausgebildet ist und eine Durchbrechung (11) aufweist, welche mit dem Fluidkanal (5) korrespondiert.

3. Ventil nach Anspruch 2, **dadurch gekennzeichnet, dass** die Dichtung (8) an der die Durchbrechung (11) begrenzenden Kante zumindest auf einer Seite einen Dichtwulst (12) aufweist.

4. Ventil nach Anspruch 2 oder 3, **dadurch gekennzeichnet, dass** die Dichtung (8) an der die Durchbrechung (11) begrenzenden Kante beidseitig einen Dichtwulst (12) aufweist.

5. Ventil nach Anspruch 3 oder 4, **dadurch gekennzeichnet, dass** der Dichtwulst (12) eine bogenförmige Kontur aufweist.

6. Ventil nach Anspruch 3 oder 4, **dadurch gekennzeichnet, dass** der Dichtwulst (12) einen flächigen Anlagebereich (19) ausbildet.

7. Ventil nach einem der Ansprüche 1 bis 6, **dadurch gekennzeichnet, dass** die Dichtung (8) an den in Umfangsrichtung weisenden Kanten Stützwulste (13) aufweist.

8. Ventil nach Anspruch 7, **dadurch gekennzeichnet, dass** die Stützwulste (13) eine bogenförmige Kontur aufweisen.

9. Ventil nach Anspruch 7, **dadurch gekennzeichnet, dass** die Stützwulste (13) einen flächigen Anlagebereich (19') ausbilden.

10. Ventil nach einem der Ansprüche 1 bis 9, **dadurch gekennzeichnet, dass** den Fluidkanälen (5) Stützrippen (14) zugeordnet sind, welche sich in axialer Richtung erstrecken und radial nach innen hervorstehen, wobei die Dichtung (8) zwischen zwei Stützrippen (14) angeordnet ist.

11. Ventil nach Anspruch 10, **dadurch gekennzeichnet, dass** die Stützwulste (13) an den Stützrippen (14) zur Anlage gelangen.

12. Ventil nach einem der Ansprüche 1 bis 11, **dadurch gekennzeichnet, dass** das Ventil (1) als Rotationsventil mit einer zylindrischen Ventilkammer (3) ausgebildet ist.

13. Ventil nach einem der Ansprüche 1 bis 12, **dadurch gekennzeichnet, dass** eine erste Lage (9) aus einem elastomeren Werkstoff und eine zweite Lage (10) aus einem Material mit niedrigem Reibungskoeffizienten ausgebildet ist, wobei die zweite Lage (10) dem Ventilkern (6) zugewandt ist.

14. Ventil nach Anspruch 13, **dadurch gekennzeichnet, dass** die zweite Lage (10) aus PTFE ausgebildet ist.

15. Ventil nach einem der Ansprüche 4 bis 14, **dadurch gekennzeichnet, dass** die Konturen der Dichtwulst (12) in den dem Ventilkern (6) und der Kammerwand (4) zugewandten Abschnitten ein Plateau aufweisen und abgeflacht sind.
